# EUROPEAN PATENT APPLICATION

(11) **EP 1 153 724 A2**
(43) Date of publication of application: **14.11.2001**
(21) Application number: 01110973.3
(22) Date of filing: 07.05.2001
(51) Int. Cl.: B29C 44/38

(54) **Method and device for feeding foamable material**

(30) Priority: 08.05.2000 IT MI001004
(71) Applicant: TEC MAC S.r.L., 20020 Arese (Milano) (IT)
(72) Inventor: Monchiero, Giovanni, 28066 Galliate, (Novara) (IT)
(74) Representative: Cicogna, Franco

(57) **Abstract**

The present invention relates to a method for making multi-component foamed material blocks, such as of polyurethanic, phenolic, siliconic, epoxydic resins and so on, comprising the steps of feeding, into a mold, a reactive mixture, through a foaming unit, mutually displacing the foaming unit and mold, to provide a foaming in a progressive variable volume space delimited by a movable wall rigidly coupled to the foaming unit, and withdrawing from the mold the foaming unit.

## Description

### BACKGROUND OF THE INVENTION

The present invention relates to a method for making blocks of multi-component foamed materials, such as polyurethanic, phenolic, siliconic, epoxydic resins, as well as a system for carrying out said method.

As is known, for making foamed plastics material blocks are conventionally used continuously or discontinuously operating systems, using foaming molds.

For continuously making foamed material blocks, the system usually comprise a foaming chamber, in which conveying means are provided for continuously conveying the foaming material.

By this approach it is possible to use mixing and metering units of a comparatively small flow-rate, which continuously perform foaming operations on a conveying belt which is continuously driven to continuously remove the material being foamed.

It should be apparent that in such a continuously operating system, the provision of great length processing chambers and of the conveying means included therein for conveying the foamed material, involves a high constructional complexity, and, accordingly, a very high making cost.

In case of a discontinuously or batch-wise operating system, on the other hand, are used a plurality of molds in which a high amount of material to be foamed must be introduced, with a consequent requirement of using mixing and metering units having a rather high flow-rate capability, to fill-in the mold within the time period required for the foaming process.

In this approaches too, accordingly, the system has a very high complex construction, and a very low production yield.

### SUMMARY OF THE INVENTION

Accordingly, the aim of the present invention is to overcome the above mentioned drawbacks, by providing a method for making blocks of multi-component foamed materials of the above disclosed type, and a system for carrying out said method, allowing to combine the advantages of the prior systems, i.e. those deriving from both the continuous and discontinuous making methods, while obviating their drawbacks.

Within the scope of the above mentioned aim, a main object of the present invention is to provide such a method which allows to make foamed material blocks of any desired length, while using simple molds and mixing units having a comparatively low flow-rate capability.

Yet another object of the present invention is to provide such a method allowing to use start materials of a comparatively high viscosity and carbon dioxide or other not polluting gases, which at present are not used for a batch-wise type of method.

Yet another object of the present invention is to provide such a method which, owing to its specifically designed features, is very reliable and safe in operation.

According to one aspect of the present invention, the above mentioned aim and objects, as well as yet other objects, which will become more apparent hereinafter, are achieved by a method for making blocks of multi-component foamed materials, characterized in that said method comprises the steps of introducing into a mold a reactive mixture, through a foaming unit, mutually displacing said foaming unit and mold, foaming said material in a progressively variable volume space delimited by a movable wall rigid with said foaming unit, and withdrawing said foaming unit from said mold.

### BRIEF DESCRIPTION OF THE DRAWINGS

Further characteristics and advantages of the present invention will become more apparent hereinafter from the following disclosure of a preferred, though not exclusive, embodiment of a method for making blocks of multi-component foamed materials according to the invention, which is illustrated, by way of an indicative, but not limitative, example, in the figures of the accompanying drawings, where:

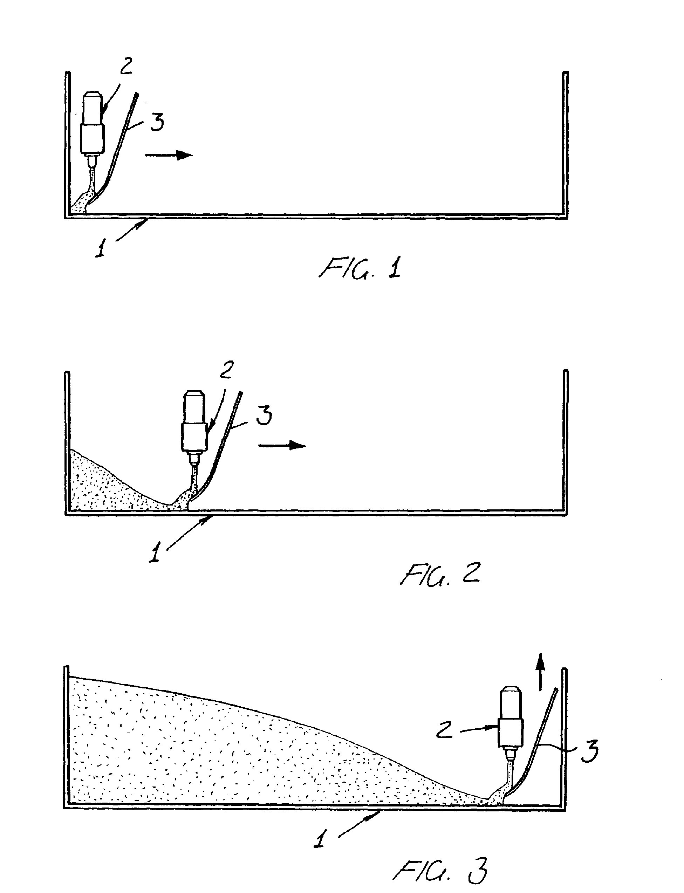

Figure 1 is a schematic view illustrating the foaming mold with the foaming unit at a starting position thereof;
Figure 2 illustrates the foaming mold and unit at a middle operating step;
Figure 3 illustrates the foaming mold with the foaming unit at the end of its displacement inside the mold;
Figure 4 illustrates the foaming mold with the foaming unit being withdrawn therefrom;
   and

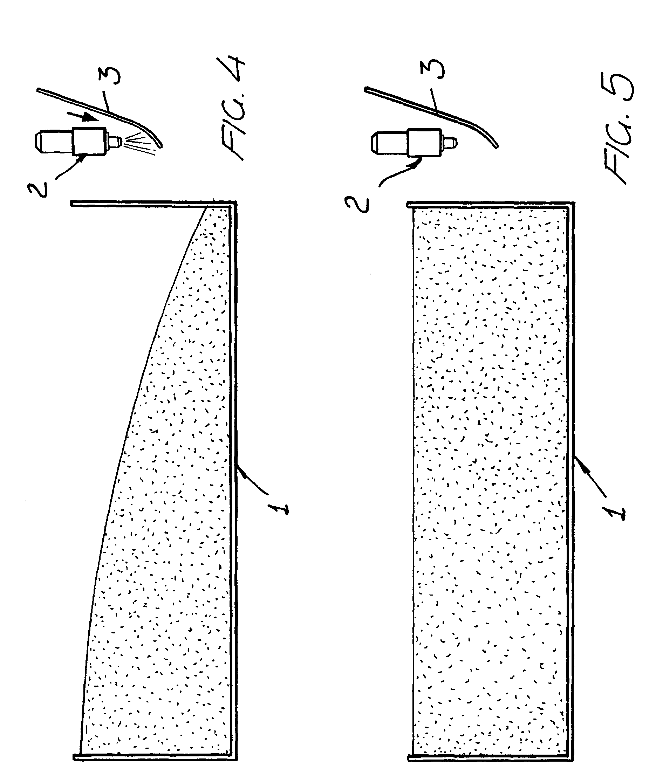

Figure 5 illustrates an end curing step for curing the multi-component foamed material block.

### DESCRIPTION OF THE PREFERRED EMBODIMENT

With reference to the number references of the above mentioned figures, the system for making blocks of multi-component foamed materials according to the present invention comprises a foaming mold, generally indicated by the reference number 1, which can be easily constructed, and includes movable walls for removing the foamed block and which can be provided with a floating cover or other system to make a square cross-section foamed block.

Inside said mold 1 a foaming unit 2, of a two or more component type, is arranged, said foaming unit operating for introducing a reactive or reaction mixture into a progressively variable volume, owing to the provision of a movable wall 3, either vertically arranged or inclined, adjoining the foaming unit 2.

Driving means are moreover provided for mutually driving the foaming unit and the wall rigid therewith, so as to allow the foaming unit to be driven or displaced on the bottom of the mold, as far as the opposite end thereof.

Upon having arrived at said opposite end portion of the mold, the foaming unit 2 is raised, for allowing the reactive mixture to be fully cured.

In this connection, it should be apparent that the displacement movement of the foaming unit and mold can be achieved by driving the mold and leaving fixed the foaming unit and wall.

The progressively variable volume foaming system, with a fixed size mold, is based on a progressive foaming principle.

More specifically, at the start of the foaming process, the foaming unit and wall 3 are arranged at the start of the mold.

As the reactive mixture is started to be cast, either instantaneously or after a preset time period, the foaming unit and wall are driven with a preset speed, thereby defining a progressively larger volume expanding or foaming chamber in which the reactive foam starts to be cured, also in a progressive manner.

At the end of the mold, the foaming unit and wall are raised and arranged outside of the mold to allow the reactive mixture to be fully cured.

To provide an optimum delivery of the reactive mixture, it is possible to cross drive the processing head, or to provide other systems such as a use of a small basin on the wall, an inclined wall, and so on.

In this connection it should moreover be pointed out that the invention also provides to use a roller shutter type of system, progressively driven on the top portion of the mold, to allow the material to be properly foamed.

Moreover, by the foaming method according to the invention it would be possible to make a squared foamed material block.

The inventive method allows moreover to use materials of a comparatively high viscosity and carbon dioxide or other non polluting gases for performing the foaming process, which was impossible in the mentioned batch-wise or discontinuous process.

From the above disclosure it should be apparent that the invention fully achieves the intended aim and objects.

In particular, the fact is to be pointed out that a foaming method has been provided allowing to exploit in combination two great advantages of the prior art, that is the possibility of providing a system including a mold in which it is possible to perform the foaming operation without using polluting gases.

The invention as disclosed is susceptible to many modifications and variations, all coming within the scope of the inventive idea.

Moreover, all the constructional details can be replaced by other technically equivalent elements.

In practicing the invention, the used materials, provided that they are compatible to the intended application, and the contingent size and shapes can be any depending on requirements.

## Claims

1. A method for making blocks of multi-component foamed materials, **characterized in that** said method comprises the steps of introducing into a mold a reactive mixture, through a foaming unit, mutually displacing said foaming unit and mold, foaming said material in a progressively variable volume space delimited by a movable wall rigid with said foaming unit, and withdrawing said foaming unit from said mold.

2. A method according to the preceding claim, **characterized in that** said reactive mixture comprises at least two components.

3. A method according to the preceding claims, **characterized in that** said foaming unit is driven near the bottom of the mold.

4. A method according to one or more of the preceding claims, **characterized in that** the driving of said foaming unit, together with said wall, provides a foaming chamber the size whereof is progressively increased, and the inside of which the reactive mixture starts to cure.

5. A method according to one or more of the preceding claims, **characterized in that** said foaming unit is driven crosswise of said mold.

6. A method according to one or more of the preceding claims, **characterized in that** said wall is vertically arranged.

7. A method according to one or more of the preceding claims, **characterized in that** said wall is inclined.

8. A method according to one or more of the preceding claims, **characterized in that** said method provides to use a roller shutter system, progressively entrained on a top portion of said mold, to control the foaming of the material being foamed.

9. A method according to one or more of the preceding claims, **characterized in that** said methods provides a squared cross-section block.

10. A method according to one or more of the preceding claims, **characterized in that** said method can process high viscosity material and provide foaming by using carbon dioxide or other non polluting gases.

11. A system for carrying out a method for making blocks of multi-component foamed materials, **characterized in that** said system comprises a mold in the inside of which is arranged a foaming unit adjoining a wall rigid with said foaming unit, driving means being moreover provided for mutually driving said foaming unit and mold, and means for withdrawing said foaming unit from said mold.

12. A system according to Claim 11, **characterized in that** said mold is provided with movable walls for withdrawing the foamed block.

13. A system, according to Claims 11 and 12, **characterized in that** said system comprises a floating cover to provide a squared cross-section foamed block.

14. A system, according to one or more of Claims 11 to 13, **characterized in that** said wall is vertically arranged.

15. A system, according to one or more of Claims 11 to 14, **characterized in that** said wall is inclined.

16. A system, according to one or more of Claims 11 to 15, **characterized in that** said system comprises driving means for crosswise driving said foaming unit in said mold.

17. A method for making blocks of multi-components foamed materials, and a system for carrying out said method, **characterized in that** they comprise one or more of the disclosed and/or illustrated features.
